# EUROPÄISCHE PATENTSCHRIFT

(11) **EP 1 623 559 B1**
(45) Veröffentlichungstag und Bekanntmachung des Hinweises auf die Patenterteilung: **26.02.2014**
(21) Anmeldenummer: 04717588.0
(22) Anmeldetag: 05.03.2004
(51) Int. Cl.: H04L 29/12, H04L 29/08

(54) **VERFAHREN ZUM DATENAUSTAUSCH ZWISCHEN NETZELEMENTEN IN NETZWERKEN MIT VERSCHIEDENEN ADRESSBEREICHEN**
METHOD FOR DATA EXCHANGE BETWEEN NETWORK ELEMENTS IN NETWORKS WITH DIFFERING ADDRESS RANGES
PROCEDE D'ECHANGE DE DONNEES ENTRE DES ELEMENTS DE RESEAU DANS DES RESEAUX A DIFFERENTES ZONES D'ADRESSE

(30) Priorität: 12.05.2003 DE 10321227
(43) Veröffentlichungstag der Anmeldung: 08.02.2006
(73) Patentinhaber: Siemens Aktiengesellschaft, 80333 München (DE)
(72) Erfinder: VEITS, Oliver, 85221 Dachau (DE)
(86) Internationale Anmeldenummer: PCT/EP2004/002264
(87) Internationale Veröffentlichungsnummer: WO 2004/100498

(56) Entgegenhaltungen:
- WO-A-02/23822
- WO-A-03/028340
- US-A- 6 006 272
- US-A1- 2002 133 549

## Beschreibung

Die Erfindung betrifft ein Verfahren zum Datenaustausch von Netzelementen, welche in unterschiedlichen Netzwerkbereichen angeordnet sind.

Zur Unterstützung eines Datenaustauschs zwischen in verschiedenen lokalen paketorientierten Netzwerkbereichen angeordneten Netzelementen ist eine Verwendung von Netzknoteneinrichtungen - beispielsweise Router oder Gateways - bekannt.

Ein paketorientierter Datenaustausch erfolgt zum Beispiel unter Anwendung des 'Internet Protocol', abkürzend auch mit IP bezeichnet. In der weiteren Beschreibung wird auf das Internet Protocol Bezug genommen, die Erfindung ist jedoch nicht auf die Verwendung dieses Protokolls beschränkt, sondern umfasst alle paketorientierten Kommunikationsweisen, bei welchen sich zum Datenaustausch verwendete Datenpakete aus einem Datenteil und einem charakterisierenden Teil - in der Literatur häufig 'Header' genannt - zusammensetzen. Der Header enthält dabei üblicherweise eine das sendende Netzelement charakterisierende Absenderadresse sowie eine das für den Empfang bestimmte Netzelement charakterisierende Zieladresse.

Bei einer Verwendung von lediglich innerhalb eines ersten lokalen Netzwerkbereichs gültigen - 'lokalen' - Adressen zur Adressierung eines Netzelements ist für eine Kommunikation mit Netzelementen eines zweiten Netzwerkbereichs eine Umsetzung der im ersten Netzwerk lokal gültigen Adressen in für den zweiten Netzwerkbereich gültige Adressen notwendig. Als Absender- bzw. Zieladresse wird dabei die jeweilige IP-Adresse des sendenden bzw. des zum Empfang bestimmten Netzelements verwendet. Ein entsprechendes Verfahren - in der Fachwelt als Adressumsetzung bzw. NAPT (Network Address and Port Translation) oder NAT (Network Address Translation) bekannt - wird üblicherweise durch eine das erste und das zweite Netzwerk verbindende Netzknoteneinrichtung, z.B. anhand von Zuordnungstabellen, durchgeführt.

Aus dem Stand der Technik sind derartige Verfahren zur Adressumsetzung auf einer zwischen Netzbereichen vorgesehener NAT-Einrichtung bekannt. Beispielsweise ist in der WO 02/023822 A eine abfragbare NAT-Einrichtung an einer Domänengrenze offenbart. Aus der WO 03/028340 A ist ein NAT-Host bekannt, welcher im Netzbereich eines Clients lokalisiert ist und in Zusammenarbeit mit einem Adressenserver dem Client auf Anfrage eine in einem jenseits des eigenen Netzbereichs gültige Adresse zuweist.

Ferner ist aus der US 2002/133549 A1 ein Verfahren bekannt, bei der unter Umgehung der NAT-Verfahren eine unübersetzte Adresse geliefert wird, die im Rahmen einer Tunnelverbindung zur Kommunikation verwendet werden kann.

In dem Dokument RFC 3027 (Request for Comment) der IETF (Internet Engineering Task Force) werden verschiedene Applikationen bzw. Kömmunikationsprotokolle genannt, bei deren Anwendung Probleme mit der vorgenannten Adressumsetzung auftreten.

Eine Kategorie problembehafteter Applikationen stellen dabei sogenannte 'Bundled Session Applications' dar, bei deren paketorientierten Datenaustausch Adressierungsinformationen zusätzlich zu einer im Header auch in einem Datenteil ('Payioad') eines jeweiligen Datenpakets enthalten sind.

Ein Beispiel derartiger Bundled Session Applications sind insbesondere die in der Fachwelt bekannten Kommunikationsprotokolle SIP ('Session Initiated Protocol') bzw. H.323.

Da die im Payload enthaltenen - ebenso wie die im Header enthaltenen - Adressierungsinformationen üblicherweise domänenspezifisch - d.h. nur in einem jeweiligen Netzwerkbereich gültig - sind, besitzen diese nach einem Übergang in einen anderen Netzwerkbereich auch mit einer erfolgten Adressumsetzung keine Gültigkeit, da Netzknoteneinrichtung üblicherweise nur Adressinformationen im Header derartiger Datenpakete gemäß des NAT-Verfahrens umsetzen.

Eine Ausnahme hierfür bieten Netzknoteneinrichtungen, welche als sogenannte 'Application Layer Gateways', kurz ALG, ausgestaltet sind. Diese ALG berücksichtigen auch im Payload enthaltene Adressinformationen für eine NAT-analoge Adressumsetzung. Derartige ALG sind jedoch spezifisch auf das jeweilige Protokoll einzurichten und weisen des weiteren Laufzeitprobleme wegen der benötigten Rechendauer bei einer Auswertung und Umsetzung der Payload-Daten auf. Nachteilig sind diese ALG besonders bei einem Umstieg auf neuere Versionen ('Upgrade') des verwendeten Kommunikationsprotokolls bzw. der verwendeten Applikation. In einem solchen Fall ist meistens mit einem Upgrade des Kommunikationsprotokolls in nachteilhafter Weise auch eine Änderung der in der ALG ablaufenden Software notwendig. Weiterhin ist bei einer Verwendung derartiger ALG zu beachten, dass für alle netzwerkbereich-überschreitend kommunizierenden Netzelemente derartige ALG als direkter Kommunikationspartner zu verwenden sind, was nicht immer garantiert werden kann.

Aufgabe der Erfindung ist es, Mittel zum Datenaustausch zwischen mit einer Adressierungsinformationen in einem charakterisierenden Bereich ausgetauschter Datenpakete umsetzenden Netzknoteneinrichtung getrennten Netzelementen anzugeben, mit denen eine im jeweils entgegengesetzten Netzwerkbereich gültige Adressierung des sendenden Netzelements anhand der in einem Datenbereich ausgetauschter Datenpakete eingetragenen Adressierungsinformationen gewährleistet ist.

Eine Lösung der Aufgabe erfolgt hinsichtlich ihres Verfahrensaspekts durch ein Verfahren mit den Merkmalen des Patentanspruchs 1.

Erfindungsgemäß ist vorgesehen, dass von einem in einem ersten Netzwerkbereich angeordneten ersten Netzelement über eine Adressierungsinformationen in einem charakterisierenden Bereich ausgetauschter Datenpakete umsetzenden Netzknoteneinrichtung an ein in einem zweiten Netzwerkbereich angeordnetes zweites Netzelement gesendete Datenpakete in dessen Datenbereich eine im zweiten Netzwerkbereich gültige Absenderadresse enthalten. Die im zweiten Netzwerkbereich gültige Absenderadresse ist dabei entweder lokal im ersten Netzelement oder auf einer zentralen Datenbank vorgehalten.

Ein wesentlicher Vorteil des erfindungsgemäßen Verfahrens ist darin zu sehen, dass eine gattungsübliche Netzknoteneinrichtung - insbesondere Gateway oder Router - ohne weitere gestalterische Eingriffe zur Verbindung der beiden Netzwerkbereiche eingesetzt werden kann.

Das erfindungsgemäße Verfahren ist vorteilhaft in den Netzelementen, d.h. Endpunkten einer paketorientierten Kommunikation zu implementieren und erfordert daher nur geringen Programmieraufwand und insbesondere keinerlei Eingriffe in das Gesamtsystem bzw. in vermittelnde Netzknoteneinrichtungen.

Vorteilhafte Weiterbildungen der Erfindung sind in den Unteransprüchen angegeben.

In vorteilhafter Weise wird neben der im Ziel-Netzwerkbereich gültigen Ursprungsadresse auch die dort gültige Zieladresse in den Datenbereich eingetragen.

In vorteilhafter Weise werden in analoger Weise die im ersten Netzwerkbereich gültigen Ziel- bzw. Ursprungsadresse vom zweiten Netzelement übermittelt. Eine jeweilige Wahl, in welche Richtung eine Übersendung einer im jeweils entgegengesetzten Netzwerkbereich gültigen Ziel- bzw. Ursprungsadresse erfolgen soll, hängt u.a. auch davon ab, für welche Netzwerkbereiche eine Adressumsetzung erfolgen soll. Diese kann - neben einer in der Figurenbeschreibung erläuterten bidirektionalen Adressumsetzung - auch durchaus nur unidirektional, beispielsweise beim Übergang vom ersten in den zweiten Netzwerkbereich, nicht aber beim Übergang vom zweiten in den ersten Netzwerkbereich erfolgen. Je nach den vorliegenden Gegebenheiten wird der Fachmann mit den Mitteln der erfindungsgemäßen Idee eine für den jeweiligen Einsatzbereich günstige Realisierung wählen.

Besonders vorteilhaft ist eine Anfrageprozedur zur Ermittlung der im jeweils anderen Netzwerkbereich gültigen Ursprungs- und/oder Zieladresse. Eine derartige Anfrageprozedur gewährleistet eine dynamische Ermittlung der jeweiligen Adresse ohne auf gespeicherte Werte zurückgreifen zu müssen. Damit entfällt vorteilhaft eine Datenbankpflege gespeicherter Adressen in einer zentralen Datenbank bzw. in einem dem jeweiligen Netzelement zugeordneten Speicherbereich.

Ein Ausführungsbeispiel mit weiteren Vorteilen und Ausgestaltungen der Erfindung wird im folgenden anhand der Zeichnung näher erläutert.

Dabei zeigen:
- Fig. 1:: ein Strukturbild zur schematischen Darstellung zweier Netzwerkbereiche mit einer die Netzwerkbereiche verbindenden Netzknoteneinrichtung;
- Fig. 2:: eine Struktur eines ausgetauschten Datenpakets;
- Fig. 3A:: ein chronologisches Ablaufbild zur schematischen Darstellung einer paketorientierten Anfrageprozedur in einer ersten Ausführungsform;
- Fig. 3B:: ein chronologisches Ablaufbild zur schematischen Darstellung einer paketorientierten Anfrageprozedur in einer zweiten Ausführungsform;
- Fig. 4:: ein chronologisches Ablaufbild zur schematischen Darstellung eines paketorientierten Datenaustauschs;

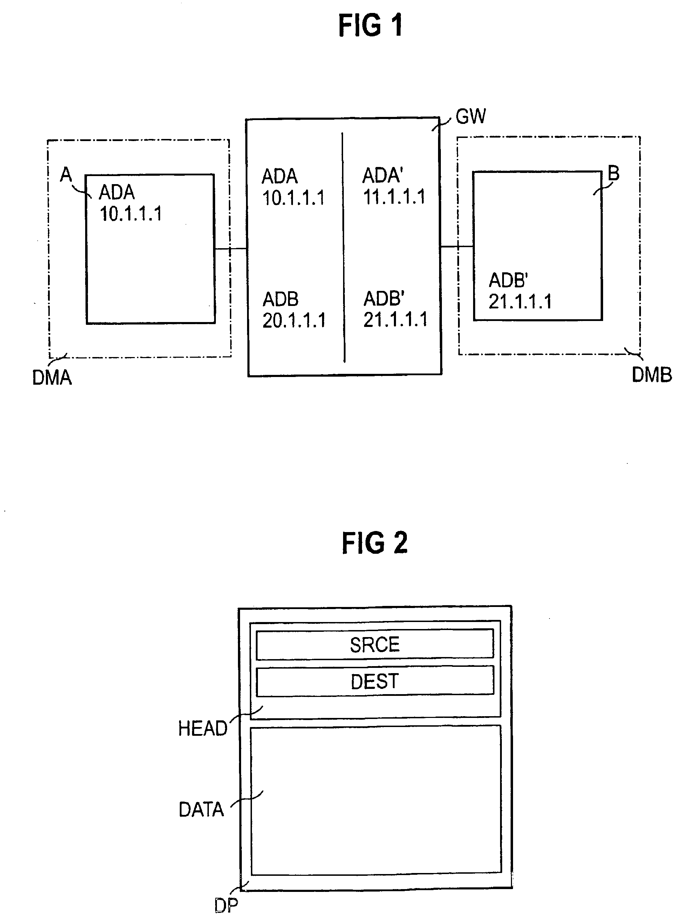

In Fig. 1 sind ein erster Netzwerkbereich DMA und ein zweiter Netzwerkbereich DMB mit einer beide Netzwerkbereiche DMA,DMB verbindenden Netzknoteneinrichtung GW dargestellt. Die Netzwerkbereiche DMA,DMB sind in der Zeichnung jeweils strichpunktiert versinnbildlicht.

Ein erstes Netzelement A ist im ersten Netzwerkbereich DMA angeordnet, ein zweites Netzelement B ist im zweiten Netzwerkbereich DMB angeordnet. Neben den genannten Netzelementen A,B sind bei Bedarf weitere - nicht dargestellte - Netzelemente im jeweiligen Netzbereich DMA,DMB anordenbar. Weiterhin sind neben der Netzknoteneinrichtung GW bei Bedarf weitere - nicht dargestellte - Netzknoteneinrichtungen zur Verbindung der Netzwerkbereiche A,B einzusetzen.

Dem ersten Netzelement A ist eine im ersten Netzwerkbereich DMA gültige Adresse ADA zugewiesen. Die dem ersten Netzelement A zugewiesene Adresse ADA liegt vorzugsweise als IP-Adresse ('Internet Protocol') vor, die Erfindung beschränkt sich jedoch nicht auf den Einsatz des zugehörigen Internet Protokolls. Für der dem ersten Netzelement A zugewiesenen und im ersten Netzwerbereich DMA gültigen Wert der Adresse ADA wird ein exemplarischer Wert von '10.1.1.1' angenommen.

Dem zweiten Netzelement B ist eine im ersten Netzwerkbereich DMA gültige Adresse ADB mit dem Wert '20.1.1.1' zugewiesen. Für das zweite Netzelement B ist in Fig. 1 eine im zweiten Netzwerkbereich DMB gültige Adresse ADB' mit dem Wert '21.1.1.1' vermerkt. Das im ersten Netzwerkbereich DMA mit der Adresse ADB und dem Wert 20.1.1.1 adressierte zweite Netzelement B wird durch die Netzknoteneinrichtung GW in die im zweiten Netzwerkbereich DMB gültige Adresse ADB' mit dem Wert 21.1.1.1 umgesetzt. Entsprechend wird das im zweiten Netzwerkbereich DMB mit der Adresse ADA' und einem Wert '11.1.1.1' adressierte erste Netzelement A durch die Netzknoteneinrichtung GW in die im ersten Netzwerkbereich DMA gültige Adresse ADA mit dem Wert 10.1.1.1 umgesetzt. Die jeweilige Umsetzung der Adressen erfolgt dabei in der Netzknoteneinrichtung mit einem als 'Network Address Translation' bzw. abkürzend NAT bekannten Verfahren.

In der Darstellung der Netzknoteneinrichtung GW sind im den ersten Netzwerkbereich DMA zugewandten linken Bereich die im ersten Netzwerkbereich DMA gültige Adresse ADA des ersten Netzelements A sowie die im ersten Netzwerkbereich DMA gültige Adresse ADB des zweiten Netzelements B und im den zweiten Netzwerkbereich DMB zugewandten rechten Bereich die im zweiten Netzwerkbereich DMB gültige Adresse ADA' des ersten Netzelements A sowie die im zweiten Netzwerkbereich DMB gültige Adresse ADB' des zweiten Netzelements B dargestellt. Demzufolge zeigt das Hochkomma (') im jeweiligen Bezugszeichen an, dass derart gekennzeichnete Adressen ADA',ADB' eines Netzelements A,B im zweiten Netzwerkbereich DMB gültig ist.

Die jeweilige Adresse ADA,ADB,ADA',ADB' ist dabei eine je nach Anwendung als Ursprungs- oder Zieladresse verwendete Adresse ADA,ADB,ADA',ADB' zu verstehen.

In Fig. 2 ist eine Struktur eines zum paketorientierten Datenaustausch verwendeten Datenpakets DP dargestellt. Das Datenpaket DP untergliedert sich in einen auch mit 'Header' bezeichneten charakterisierenden Bereich HEAD und einen auch mit 'Payload' bezeichneten, zu transportierende Daten enthaltenden Bereich DATA. Der charakterisierende Bereich HEAD enthält üblicherweise eine den Absender ('Source') charakterisierende Information SRCE sowie eine den Empfänger ('Destination') charakterisierende Information DEST.

Im folgenden wird unter weiterer Bezugnahme auf die Funktionseinheiten der jeweils vorausgegangenen Figuren ein Austausch von paketorientierten Nachrichten näher erläutert.

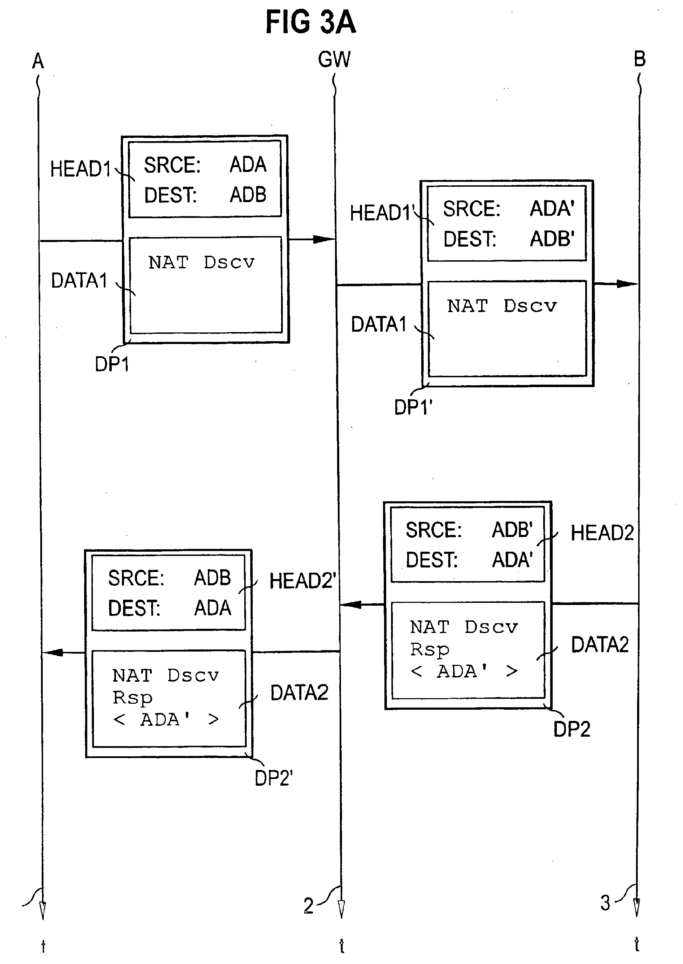

Fig. 3A zeigt ein chronologisches Ablaufbild zur schematischen Darstellung einer paketorientierten Anfrageprozedur in einer ersten Ausführungsform.

Zeitstrahlen 1,2,3 sind in dieser Reihenfolge dem ersten Netzelement A, der Netzknoteneinrichtung GW sowie dem zweiten Netzelement B zugeordnet. Die Zeitstrahlen A,GW,B verlaufen von oben nach unten, so dass spätere Zeitpunkte t weiter unten liegen als frühere Zeitpunkte.

Bei der im folgenden beschriebene Anfrageprozedur wird davon ausgegangen, dass in allen Netzbereichen DMA,DMB Netzknoteneinrichtungen GW vorgesehen sind, welche eine Adressumsetzung nach dem NAT-Verfahren ausschließlich in einem charakterisierenden Bereich der auszutauschenden Datenpakete DP durchführen. Es kommen also insbesondere keine oben beschriebenen ALG (Application Layer Gateways) zu Einsatz, welche die Adressinformationen auch im Datenteil DATA auszutauschender Datenpakete umsetzen.

Zur Durchführung der Anfrageprozedur in einer ersten Ausführungsform tauschen die beiden Netzelemente A,B Datenpakete DP1,DP1',DP2,DP2' in einem vordefinierten Format aus. Bezüglich des vordefinierten Formats kann beispielsweise eine bestimmte Form bzw. eine Markierung in Form eines 'Identifiers' bzw. 'Flag' im Datenbereich DATA oder im charakterisierenden Bereich HEAD vorgesehen sein. In der hier dargestellten Ausführungsform wird von einem im jeweiligen Datenbereich DATA1,DATA2 der ausgetauschten Datenpakete DP1,DP1',DP2,DP2' vorgesehenen Schlüsselwort 'NAT Dscv' ausgegangen. 'Dscv' steht dabei für den im folgenden zu beschreibenden Anfrageprozess ('Discovery').

Zu einem ersten Zeitpunkt sendet das erste Netzelement A ein Datenpaket DP1. In einem das Datenpaket DP1 charakterisierenden Bereich HEAD1 ist als Ursprung SRCE die im ersten Netzwerkbereich gültige Netzwerkadresse ADA des ersten Netzelements A sowie als Ziel DEST die im ersten Netzwerkbereich gültige Netzwerkadresse ADB des zweiten Netzelements B eingetragen.

Das erste Datenpaket DP1 wird an der Netzknoteneinrichtung GW empfangen. Im charakterisierenden Bereich HEAD1 werden die ausgelesenen im ersten Netzwerkbereich DMA gültigen Ziel- und Ursprungsadressen ADA;ADB in die im zweiten Netzwerkbereich DMB gültigen Ziel- und Ursprungsadressen ADA';ADB' gemäß des NAT-Verfahrens umgesetzt. Das erste Datenpaket DP1 wird nach dieser NAT-Bearbeitung zu einem darauf folgenden Zeitpunkt mit einem modifizierten charakterisierenden Bereich HEAD1' als Datenpaket DP1' an das zweite Netzelement B weitergeleitet.

Das zweite Netzelement B empfängt das Datenpaket DP1' und entnimmt dem Eintrag 'NAT Dscv' im Datenbereich DATA1, dass dieses Datenpaket eine Anfrageprozedur einleitet. Das zweite Netzelement B liest daraufhin die Ursprungs- bzw. Zieladresse ADA',ADB' des empfangenen Datenpakets DP1' aus und speichert diese.

Zu einem darauffolgenden Zeitpunkt generiert das zweite Netzelement B ein Antwortdatenpaket DP2, welches in einem zugehörigen Datenbereich DATA2 ein Schlüsselwort 'NAT Dscv RSP' enthält und damit eine Beantwortung ('Response') der durch das erste Datenpaket DP1 eingeleiteten Anfrageprozedur anzeigt.

In einem das zweite Datenpaket DP2 charakterisierenden Bereich HEAD2 ist als Ursprung SRCE die im zweiten Netzwerkbereich DMB gültige Netzwerkadresse ADB' des zweiten Netzelements B sowie als Ziel DEST die im zweiten Netzwerkbereich DMB gültige Netzwerkadresse ADA' des ersten Netzelements A eingetragen. Zur Erzeugung von Ursprung SRCE und Ziel DEST des Antwortdatenpakets DP2 wurden also die im voraus empfangenen Datenpaket DP1 entnommenen Informationen zum Ursprung SRCE und Ziel DEST vertauscht.

Im Datenbereich DATA2 des Antwortdatenpakets DP2 ist außerdem der Wert der im zweiten Netzwerkbereich DMB gültigen Adresse ADA' des Netzelements A eingetragen.

Das Antwortdatenpaket DP2 wird an die Netzknoteneinrichtung GW gesendet und von dieser mit analogen - bereits beschriebenen - NAT-Modifikationen als modifizierte Antwortnachricht DP2' an das erste Netzelement A weitergeleitet, welches den Wert der im zweiten Netzwerkbereich DMB gültigen Adresse ADA' des Netzelements A aus dem Datenbereich DATA2 der modifizierten Antwortnachricht DP2' entnimmt und diesen speichert.

An den beschriebenen Austausch von Datenpaketen DP1,DP1',DP2,DP2' schließt sich nun ein weiterer Austausch von Datenpaketen an, wobei dieser weitere - nicht dargestellte - Datenpaketaustausch analog zum hier dargestellten erfolgt und diesmal vom zweiten Netzelement B initiiert wird. Nach Abschluss dieses Austauschs ist im zweiten Netzelement B ein Wert ihrer im ersten Netzwerkbereich DMA gültigen Adresse ADB gespeichert. Die Anfrageprozedur ist damit abgeschlossen. Ohne Mitzählung der von der Netzknoteneinrichtung GW weitergeleiteten Datenpakete DP1',DP2' ist für die Anfrageprozedur gemäß dieser ersten Ausführungsform ein Austausch von vier Datenpaketen notwendig.

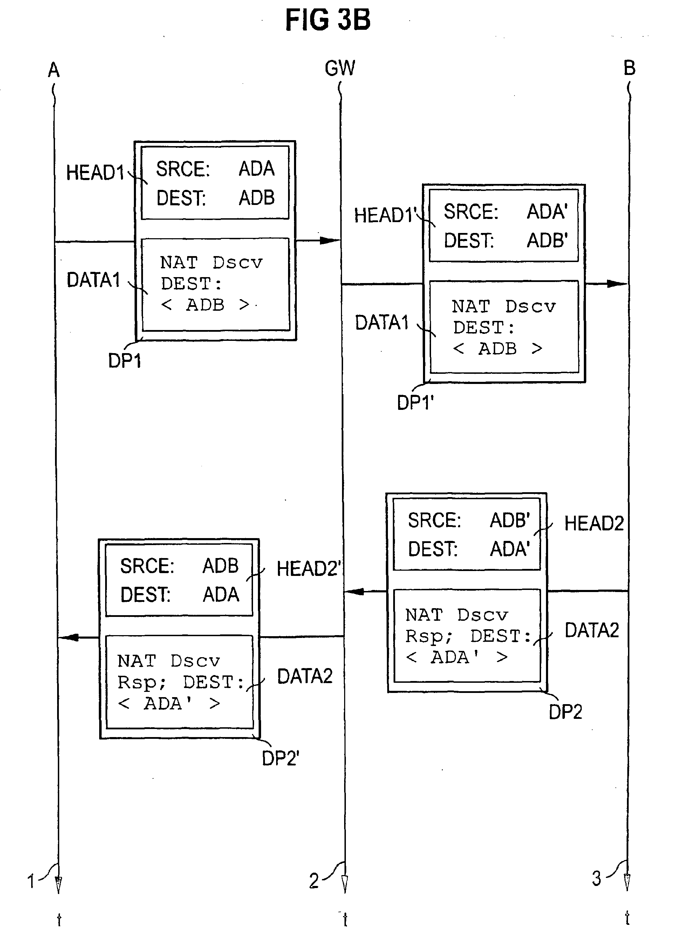

In Fig. 3B ist eine zweite Ausführungsform einer Anfrageprozedur dargestellt. Statt einer unabhängig voneinander in jede Richtung erfolgenden Datenpaketaustausch wie im vorigen Ausführungsbeispiel dargestellt, werden - ohne Mitzählung der von der Netzknoteneinrichtung GW weitergeleiteten Datenpakete DP1',DP2' - in diesem Ausführungsbeispiel lediglich zwei Datenpakete DP1,DP2 ausgetauscht.

Das Netzelement A fügt hierfür im ersten Datenteil DATA1 des ersten Datenpakets DP1 bereits eine Zielinformation DEST ein, an welche Adresse dieses erste Datenpaket DP1 aus Sicht des Netzelements A geschickt wird, mit anderen Worten an die im ersten Netzwerkbereich DMA gültige Zieladresse ADB des zweiten Netzelements B.

Das Netzelement B kann diese Information schon beim Empfang nutzen, um zu erfahren, welche Adresse ADB es im ersten Netzwerkbereich DMA besitzt.

In den Datenteil DATA2 der Antwortnachricht DP2 fügt das Netzelement B dann wie im vorhergehenden Ausführungsbeispiel eine Zielinformation DEST ein, unter welcher Adresse ADA' dieses das Netzelement A sieht.

Nach Empfang des von der Netzknoteneinrichtung GW in üblicher Weise modifizierten zweiten Datenpakets DP2' am ersten Netzelement A kennen beide Netzelement A,B jeweils ihre "übersetzten" Adressen ADA',ADB, mithin die Adressen ADA',ADB, unter der sie das jeweils andere Netzelement B;A im entgegengesetzten Netzwerkbereich DMB,DMA adressiert.

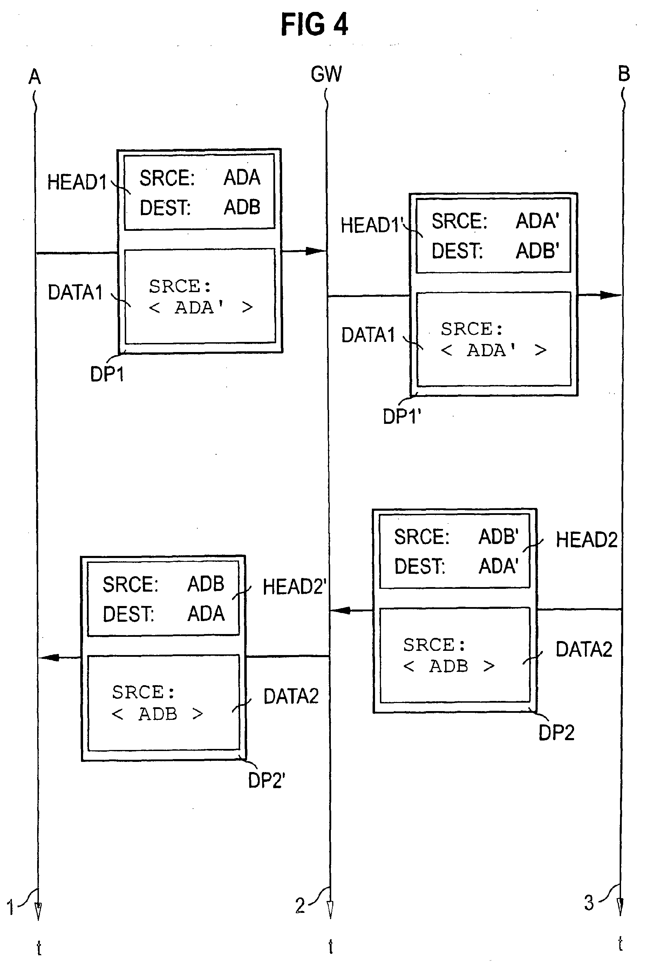

Fig. 4 zeigt einen nach der Anfrageprozedur möglichen Datenaustausch. Mit Kenntnis einer Ursprungsadresse ADA';ADB im jeweils entgegengesetzten Netzwerkbereich DMB,DMA verwendet das jeweils sendende Netzelement A;B in einem Datenteil DATA1;DATA2 ausgetauschter Datenpakete DP1,DP1';DP2,DP2' die jeweils im anderen Netzwerkbereich DMB;DMA gültige Adresse ADA';ADB als Ursprungsangabe SRCE. Weiterhin verwendet der jeweilige Empfänger A;B seiner im jeweils anderen Netzwerkbereich DMB;DMA gültigen Adresse ADA';ADB bei der Kommunikation mit dem Partnernetzelement B;A im Datenbereich gesendeter Datenpakete nicht mehr (wie vorher) seine 'wirkliche', d.h. in seinem eigenen Netzwerkbereich DMA;DMB gültige IP-Adresse, sondern die Adresse, die ihm vom Partnernetzelement B;A mitgeteilt wurde, d.h. die Adresse, unter dem er bei seinem Kommunikationsteilnehmer B;A bekannt ist.

Mit den erfindungsgemäßen Mitteln ist eine Lösung eines in der sogenannten Internet Telephonie mit VoIP-Kommunikationsendgeräten ('Voice over Internet Protocol') in Verbindung mit NAT möglich. Es ist vor allem aus der Internet Telephonie bekannt, dass eine Übersetzung von IP-Adressen ein Problem für VoIP-Kommunikationsendgeräten bedeuten kann, wenn diese auf dem Internet Protokoll basieren.

Heute gängige Vermittlungsprotokolle wie H.323 oder SIP sind darauf angewiesen, IP-Adressen im Datenteil von IP-Paketen zu übermitteln. Derartige Probleme treten also immer dann auf, wenn mit NAT arbeitende Netzknoteneinrichtungen GW die IP-Adressen nur im Header HEAD der IP-Pakete, nicht aber im Datenteil DATA umsetzen.

In einer Ausführungsform des Verfahrens gemäß Fig. 4 - wobei dortige Netzelemente A,B mit VoIP-Endgeräten A,B gleichzusetzen sind - werden von einem Initiator einer gemäß des Standards H.225 erfolgenden Kommunikation in einem sogenannten 'user-user' Teil einer SETUP-Nachricht dem zugehörigen Kommunikationsteilnehmer B,A mitgeteilt, mit welcher IP-Adresse er angesprochen wird. Damit erfährt dieser, unter welcher IP-Adresse er beim Initiator sichtbar ist, ohne eigens eine andersartige 'NAT-Discovery' durchführen zu müssen. Im Gegenzug teilt der Kommunikationsteilnehmer dem Initiator der Kommunikation im user-user Teil gemäß H.225 in einer 'ALERT'-Meldung oder in einer 'CONNECT'-Meldung mit, unter welcher IP-Adresse dieser sichtbar ist. Damit kann sich auch der Initiator eine andersartige NAT-Discovery sparen.

Das Verfahren neben seiner Anwendung für NAT-Szenarien auch hilfreich für Szenarien ohne Anwendung eines NAT-Verfahrens, in Fällen, in denen eine Applikation Schwierigkeiten hat, ihre eigene IP-Adresse zu ermitteln. Dies ist z.B. beim Einsatz von VPN-Clients ('Virtual Private Network') der Fall, wenn diese keinen eigenen sogenannten 'virtuellen Adapter' bereitstellen.

Eine Applikation, die auf Verschlüsselungsdienste eines VPN-Clients zugreifen will, darf nicht eine leicht zugängliche IP-Adresse eines 'physikalischen Adapters' verwenden, sondern muss auf die IP-Adresse des VPN-Clients zugreifen. Wenn es auf einem zugehörigen System nicht möglich ist, auf diese über Standard-APIs ('Application Programming Interface') zuzugreifen, dann eröffnet das erfindungsgemäße Verfahren einer Applikation die Möglichkeit, ihre eigene Adresse durch Nachfragen beim Kommunikationspartner zu erfahren.

## Patentansprüche

1. Verfahren zum Datenaustausch zwischen Netzelementen mit einem in einem ersten Netzwerkbereich (DMA) angeordneten ersten Netzelement (A) mit einer im ersten Netzwerkbereich (DMA) domänenspezifischen Adresse (ADA),
einem in einem zweiten Netzwerkbereich (DMB) angeordneten zweiten Netzelement (B) mit einer im ersten Netzwerkbereich (DMA) domänenspezifischen Adresse (ADB),
einer zwischen den Netzwerkbereichen (DMA,DMB) angeordneten Netzknoteneinrichtung (GW) zur Weiterleitung eines vom ersten Netzelement (A) an das zweite Netzelement (B) zu sendenden Datenpakets (DP), wobei
das Datenpaket (DP) aus einem charakterisierenden Bereich (HEAD) und einem Datenbereich (DATA) besteht,
im charakterisierenden Bereich (HEAD) des Datenpakets (DP) eine von der Netzknoteneinrichtung (GW) gesteuerte Umsetzung der das zu empfangende Netzelement (B) charakterisierenden Zieladresse (ADB) in eine im zweiten Netzwerkbereich (DMB) domänenspezifische Zieladresse (ADB') erfolgt,
**dadurch gekennzeichnet,**
**dass** durch das erste Netzelement (A) seine im Datenbereich (DATA) des Datenpakets (DP) anzugebende Ursprungsadresse als die im zweiten Netzwerkbereich (DMB) domänenspezifische Ursprungsadresse des ersten Netzelements (ADA') im Datenbereich (DATA) eingetragen wird.

2. Verfahren nach Anspruch 1,
**dadurch gekennzeichnet,**
**dass** durch das erste Netzelement (A) eine im Datenbereich (DATA) des Datenpakets (DP) anzugebende Zieladresse des zweiten Netzelements (B) als die im zweiten Netzwerkbereich (DMB) domänenspezifische Zieladresse (ADB') im Datenbereich (DATA) eingetragen wird.

3. Verfahren nach einem der Ansprüche 1 oder 2,
**dadurch gekennzeichnet,**
**dass** zur Weiterleitung eines vom zweiten Netzelement (B) an das erste Netzelement (A) zu sendenden Datenpakets (DP) durch das zweite Netzelement (B) seine im Datenbereich (DATA) des Datenpakets (DP) anzugebende Ursprungsadresse als die im ersten Netzwerkbereich (DMA) domänenspezifische Ursprungsadresse des zweiten Netzelements (ADB) im Datenbereich (DATA) eingetragen wird.

4. Verfahren nach einem der vorhergehenden Ansprüche,
**dadurch gekennzeichnet,**
**dass** zur Weiterleitung eines vom zweiten Netzelement (B) an das erste Netzelement (A) zu sendenden Datenpakets (DP) durch das zweite Netzelement (B) eine im Datenbereich (DATA) des Datenpakets (DP) anzugebende Zieladresse des ersten Netzelements (A) als die im ersten Netzwerkbereich (DMB) domänenspezifische Zieladresse (ADA) im Datenbereich (DATA) eingetragen wird.

5. Verfahren nach einem der vorhergehenden Ansprüche,
**dadurch gekennzeichnet,**
**dass** das Netzelement (A;B) seine im jeweils anderen Netzwerkbereich (DMB;DMA) domänenspezifische Ursprungsadresse (ADA';ADB) des an einem Datenaustausch zu beteiligenden Netzelements (B;A) mit Hilfe einer vor dem Datenaustausch erfolgenden Anfrageprozedur ermittelt.

6. Verfahren nach Anspruch 5,
**dadurch gekennzeichnet,**
**dass** die Anfrageprozedur folgende Schritte enthält:
- Senden einer Anfragenachricht (DP1,DP1') vom ersten Netzelement (A) an das im zweiten Netzbereich (DMB) angeordnete zweite Netzelement (B) mit einer im Datenteil (DATA1) enthaltenen im ersten Netzwerkbereich (DMA) domänenspezifischen Zieladresse (ADB) des zweiten Netzelements (B);
- Empfang der Anfragenachricht (DP1,DP1') durch das zweite Netzelement (B) und Speicherung der im ersten Netzwerkbereich (DMA) domänenspezifischen Zieladresse (ADB) des zweiten Netzelements (B);
- Senden einer Antwortnachricht (DP2,DP2') vom zweiten Netzelement (B) an das erste Netzelement (A) mit einer im Datenteil (DATA2) enthaltenen im zweiten Netzwerkbereich (DMB) domänenspezifischen Zieladresse (ADA') des ersten Netzelements (A); und;
- Empfang der Antwortnachricht (DP2,DP2') durch das erste Netzelement (A) und Speicherung der im zweiten Netzwerkbereich (DMB) domänenspezifischen Zieladresse (ADA') des zweiten Netzelements (B).

7. Computerprogrammprodukt mit Programmkode zur Durchführung des Verfahrens nach einem der Ansprüche 1 bis 6, wenn das Computerprogrammprodukt auf dem ersten Netzelement (A) abläuft.

8. Netzelement bestehend aus Mitteln zur Durchführung des Verfahrens nach einem der Ansprüche 1 bis 6.

9. Netzelement nach Anspruch 8,
**gekennzeichnet durch**,
eine Ausgestaltung als paketorientiert kommunizierendes Kommunikationsendgerät.

## Claims

1. Method for data exchange between network elements having
a first network element (A) arranged in a first network domain (DMA) with an address (ADA) that is valid in the first network domain (DMA),
a second network element (B) arranged in a second network domain (DMB) with an address (ADB) that is valid in the first network domain (DMA),
a network node device (GW) arranged between the network domains (DMA,DMB) for forwarding a data packet (DP) that is to be sent from the first network element (A) to the second network element (B), wherein
the data packet (DP) consists of a characterising part (HEAD) and a data part (DATA),
the destination address (ADB) characterising the receiving network element (B) in the characterising part (HEAD) of the data packet (DP) is translated under the control of the network node device (GW) into a destination address (ADB') that is valid in the second network domain (DMB), **characterised in that**
the first network element (A) enters in the data part (DATA) its source address that is to be specified in the data part (DATA) of the data packet (DP) as the source address of the first network element (ADA') that is valid in the second network domain (DMB).

2. Method according to claim 1,
**characterised in that**
the first network element (A) enters in the data part (DATA) a destination address of the second network element (B) that is to be specified in the data part (DATA) of the data packet (DP) as the destination address (ADB') that is valid in the second network domain (DMB).

3. Method according to one of claims 1 or 2,
**characterised in that**
in order to forward a data packet (DP) that is to be sent from the second network element (B) to the first network element (A), the second network element (B) enters in the data part (DATA) its source address that is to be specified in the data part (DATA) of the data packet (DP) as the source address of the second network element (ADB) that is valid in the first network domain (DMA).

4. Method according to one of the preceding claims,
**characterised in that**
in order to forward a data packet (DP) that is to be sent from the second network element (B) to the first network element (A), the second network element (B) enters in the data part (DATA) a destination address of the first network element (A) that is to be specified in the data part (DATA) of the data packet (DP) as the destination address (ADA) that is valid in the first network domain (DMB).

5. Method according to one of the preceding claims,
**characterised in that**
with the aid of a discovery procedure that takes place before a data exchange the network element (A;B) determines its source address (ADA';ADB), valid in the respective other network domain (DMB;DMA), of the network element (B;A) that is to take part in the data exchange.

6. Method according to claim 5,
**characterised in that**
the discovery procedure includes the following steps:
- sending of a discovery message (DP1,DP1') from the first network element (A) to the second network element (B) arranged in the second network domain (DMB) with a destination address (ADB) of the second network element (B) that is contained in the data part (DATA1) and is valid in the first network domain (DMA);
- reception of the discovery message (DP1,DP1') from the second network element (B) and storage of the destination address (ADB) of the second network element (B) that is valid in the first network domain (DMA);
- sending of a response message (DP2,DP2') from the second network element (B) to the first network element (A) with a destination address (ADA') of the first network element (A) that is contained in the data part (DATA2) and is valid in the second network domain (DMB); and
- reception of the response message (DP2,DP2') by the first network element (A) and storage of the destination address (ADA') of the second network element (B) that is valid in the second network domain (DMB).

7. Computer program product containing program code for performing the method according to one of claims 1 to 6 when the computer program product is executed on the first network element (A).

8. Network element comprising means for performing the method according to one of claims 1 to 6.

9. Network element according to claim 8,
**characterised by**
an embodiment as a communication terminal communicating according to a packet-oriented method.

## Revendications

1. Procédé d'échange de données entre des éléments de réseau, comprenant un premier élément de réseau (A) situé dans une première zone de réseau (DMA) et ayant une adresse (ADA) spécifique à un domaine dans une première zone de réseau (DMA), un deuxième élément de réseau (B) situé dans une deuxième zone de réseau (DMB) et ayant une adresse (ADB) spécifique à un domaine dans la première partie de réseau (DMA), un dispositif de noeud de réseau (GW) situé entre les zones de réseau (DMA, DMB) et destiné à retransmettre un paquet de données (DP) à envoyer du premier élément de réseau (A) au deuxième élément de réseau (B), le paquet de données (DP) se composant d'une zone caractérisante (HEAD) et d'une zone de données (DATA), une conversion, commandée par le dispositif de noeud de réseau (GW), de l'adresse cible (ADB) caractérisant l'élément de réseau à recevoir (B) en une adresse cible (ADB') spécifique à un domaine dans la deuxième zone de réseau (DMB) étant effectuée, **caractérisé en ce que** le premier élément de réseau (A) enregistre dans la zone de données (DATA) son adresse d'origine à indiquer dans la zone de données (DATA) du paquet de données (DP) en tant que l'adresse d'origine, spécifique à un domaine dans la deuxième zone de réseau (DMB), du premier élément de réseau (ADA').

2. Procédé selon la revendication 1, **caractérisé en ce que** le premier élément de réseau (A) enregistre dans la zone de données (DATA) une adresse cible du deuxième élément de réseau (B) à indiquer dans la zone de données (DATA) du paquet de données (DP) en tant que l'adresse cible (ADB') spécifique à un domaine dans la deuxième zone de réseau (DMB).

3. Procédé selon l'une des revendications 1 ou 2, **caractérisé en ce que**, aux fins de la transmission d'un paquet de données (DP) à envoyer du deuxième élément de réseau (B) au premier élément de réseau (A), le deuxième élément de réseau (B) enregistre dans la zone de données (DATA) son adresse d'origine à indiquer dans la zone de données (DATA) du paquet de données (DP) en tant que l'adresse d'origine, spécifique à un domaine dans la première zone de réseau (DMA), du deuxième élément de réseau (ADB).

4. Procédé selon l'une des revendications précédentes, **caractérisé en ce que**, aux fins de la transmission d'un paquet de données (DP) à envoyer du deuxième élément de réseau (B) au premier élément de réseau (A), le deuxième élément de réseau (B) enregistre dans la zone de données (DATA) une adresse cible, à indiquer dans la zone de données (DATA) du paquet de données (DP), du premier élément de réseau (A) en tant que l'adresse cible (ADA) spécifique à un domaine dans la première zone de réseau (DMA).

5. Procédé selon l'une des revendications précédentes, **caractérisé en ce que** l'élément de réseau (A ; B) détermine son adresse d'origine (ADA' ; ADB), spécifique à un domaine dans l'autre zone de réseau respective (DMB ; DMA), de l'élément de réseau (B ; A) impliqué dans un échange de données à l'aide d'une procédure de requête qui a lieu avant l'échange de données.

6. Procédé selon la revendication 5, **caractérisé en ce que** la procédure de requête comporte les étapes suivantes :
- envoi d'un message de requête (DP1, DP1') du premier élément de réseau (A) au deuxième élément de réseau (B) situé dans la deuxième zone de réseau (DMB) avec une adresse cible (ADB) du deuxième élément de réseau (B) contenue dans la partie de données (DATA1) et spécifique à un domaine dans la première zone de réseau (DMA) ;
- réception du message de requête (DP1, DP1') par le deuxième élément de réseau (B) et stockage de l'adresse cible (ADB), spécifique à un domaine dans la première zone de réseau (DMA), du deuxième élément de réseau (B) ;
- envoi d'un message de réponse (DP2, DP2') du deuxième élément de réseau (B) au premier élément de réseau (A) avec une adresse cible (ADA') du premier élément de réseau (A) contenue dans la partie de données (DATA2) et spécifique à un domaine dans la deuxième zone de réseau (DMB) ; et
- réception du message de réponse (DP2, DP2') par le premier élément de réseau (A) et stockage de l'adresse cible (ADA'), spécifique à un domaine dans la deuxième zone de réseau (DMB), du deuxième élément de réseau (B).

7. Produit de programme informatique comprenant un code de programme pour exécuter le procédé selon l'une des revendications 1 à 6 lorsque le produit de programme informatique tourne sur le premier élément de réseau (A).

8. Élément de réseau composé de moyens pour exécuter le procédé selon l'une des revendications 1 à 6.

9. Élément de réseau selon la revendication 8, **caractérisé par** une réalisation en tant que terminal de communication à communication orientée paquets.
